# FASCICULE DE BREVET EUROPEEN

(11) **EP 2 121 175 B1**
(45) Date de publication et mention de la délivrance du brevet: **08.02.2012**
(21) Numéro de dépôt: 08708093.3
(22) Date de dépôt: 22.01.2008
(51) Int. Cl.: B01J 6/00, B01J 19/08, B01J 19/12, C01G 23/047, C01G 23/07

(54) **SYNTHESE DE NANOPARTICULES PAR PYROLYSE LASER**
NANOPARTIKELSYNTHESE MITTELS LASERHYDROLYSE
SYNTHESIS OF NANOPARTICLES BY LASER HYDROLYSIS

(30) Priorité: 02.02.2007 FR 0700750
(43) Date de publication de la demande: 25.11.2009
(73) Titulaire: Commissariat à l'Énergie Atomique et aux Énergies Alternatives, 75015 Paris (FR)
(72) Inventeur: PORTERAT, Dominique, F-91400 Orsay (FR)
(74) Mandataire: Cabinet Plasseraud
(86) Numéro de dépôt international: PCT/EP2008/050728
(87) Numéro de publication internationale: WO 2008/095774

(56) Documents cités:
- US-A- 4 548 798
- US-B1- 6 387 531
- GRUJIC-BROJCIN M ET AL: "Infrared study of laser synthesized anatase TiO2 nanopowders" JOURNAL OF PHYSICS D. APPLIED PHYSICS, INSTITUTE OF PHYSICS PUBLISHING, BRISTOL, GB, vol. 38, no. 9, 7 mai 2005 (2005-05-07), pages 1415-1420, XP020083673 ISSN: 0022-3727
- MIGUEL O B ET AL: "MAGNETIC NANOPARTICLES PREPARED BY LASER PYROLYSIS" septembre 2002 (2002-09), IEEE TRANSACTIONS ON MAGNETICS, IEEE SERVICE CENTER, NEW YORK, NY, US, PAGE(S) 2616-2618 , XP001131644 ISSN: 0018-9464 "Experimental", "Results", "Figure 1"
- ALEXANDRESCU R ET AL: "TiO2 nanosized powders by TiCl4 laser pyrolysis" 1 mai 2004 (2004-05-01), NANOTECHNOLOGY, IOP, BRISTOL, GB, PAGE(S) 537-545 , XP020067938 ISSN: 0957-4484 "Experimental details","Table 1", "Figures 4 and 5"
- H. KAMMLER, S. PRATSINIS: "carbon coated titania nanostructured partilces: continuous one step flame synthesis" JOURNAL OF MATERIAL RESEARCH, vol. 18, no. 11, 2003, page 2670, XP002446114 cité dans la demande

## Description

### Domaine technique

La présente invention concerne l'obtention de nanoparticules par pyrolyse laser.

Les matériaux nano-structurés connaissent depuis une dizaine d'années un très fort développement. Ce développement est lié aux propriétés de ces matériaux qui ont ouvert de nouveaux champs d'application dans des domaines aussi variés que l'optique ou la catalyse.

La taille des grains dans les matériaux nano-structurés peut s'étendre de quelques nanomètres à quelques dizaines de nanomètres et peut être choisie en fonction de la propriété visée dans une application donnée. Par exemple, les céramiques thermomécaniques ont montré de la plasticité à haute température, alors que ces matériaux ont habituellement un comportement mécaniquement fragile. Cette propriété est liée à un effet de glissement des grains et est observée en particulier lorsque la nano-structuration est à une échelle de quelques dizaines de nanomètres. En revanche, des effets dus au confinement quantique sont observés pour des particules dont la taille est plutôt de quelques nanomètres.

Pour obtenir des nanomatériaux, une approche dite "bottom-up" consiste à organiser ensemble des particules de taille nanométrique, ce qui suppose de disposer de nanoparticules en quantité compatible avec l'application visée. En outre, les nanostructures possédant les caractéristiques souhaitées doivent être obtenues de manière reproductible et présenter préférentiellement une bonne homogénéité physique (forme et taille des nano-grains, cristallinité) et chimique (composition).

Parmi les techniques de synthèse de nanoparticules, la combustion (aussi appelée synthèse par flamme) et la pyrolyse laser sont des techniques en flux, ce qui constitue un critère important pour un développement industriel. De plus, l'application de ce type de technique répond sensiblement aux critères de reproductibilité précités. La combustion est déjà utilisée à l'échelle industrielle, par exemple pour la production de nanoparticules de dioxyde de titane (TiO₂).

La pyrolyse laser apparaît aussi comme une bonne technique candidate en production industrielle pour répondre aux besoins croissants en nanoparticules.

Cette technique est basée sur l'excitation d'un composé qui absorbe l'énergie d'une radiation laser et transmet cette énergie à l'ensemble d'un milieu réactionnel qui voit alors sa température augmenter très rapidement. Les réactifs portés à haute température se décomposent. Après dissociation de ces composés, lesquels sont dits alors « précurseurs », des nanoparticules se forment puis subissent un effet de trempe (refroidissement brutal) en sortie de flamme. Cette chute brutale de température a pour effet de stopper la croissance des particules. On obtient ainsi des particules de taille nanométrique. Les différents paramètres ajustables (débits, pressions et types de précurseurs, puissance laser) permettent au final d'obtenir des nanopoudres avec une bonne homogénéité physique et chimique, ainsi que des produits variés avec une large gamme de composition chimique, de taille et de cristallinité.

### Etat de l'art connu

Concernant la technique par combustion, il est possible d'utiliser des précurseurs initialement sous forme liquide. Ils sont amenés ensuite dans un réacteur de pyrolyse sous forme vapeur, à l'aide d'un évaporateur.

Dans le cas de la technique par pyrolyse laser, l'état de l'art connu vise l'usage de précurseurs sous forme liquide (plus précisément sous forme d'aérosol).

Des références précises à l'état de l'art sont données ci-après.

### Etat de l'art concernant la combustion

Dans le document :
"Carbon coated titania nanostructured particles: Continuous, one step flamme synthesis", H. Kammler, S. Pratsinis, J. Mater. Res. 18(11), p.2670 (2003),
il a été proposé un système de combustion permettant d'utiliser un précurseur sous forme liquide. Ce système est basé sur l'utilisation d'un régulateur de débit massique (RDM) qui permet le contrôle d'un débit liquide, le régulateur étant suivi d'un évaporateur qui fait passer le liquide en phase vapeur. Cette vapeur est ensuite transférée dans un réacteur de combustion par une canalisation dont la température est régulée à 145°C.
Le système de combustion a été utilisé pour la synthèse de nanoparticules de TiO₂ à partir de Tetra Isopropoxide de Titane (TTIP). Dans ce document, le débit de TTIP n'est pas indiqué mais la production de particules est de 5 à 8 grammes par heure. Les particules contiennent toujours du carbone (de 0,5 à 50 % massique) et la surface spécifique s'étend dans une gamme de 29 à 62 m² par gramme.

Toutefois, en tant que technique basée sur une combustion, seules des poudres d'oxydes métalliques peuvent être obtenues à partir de précurseurs métalliques. Ainsi, la principale limite de cette technique de synthèse vient des mécanismes chimiques mis enjeu et conduisant nécessairement à l'obtention de nanoparticules d'oxydes.

### Etat de l'art concernant la pyrolyse laser

La pyrolyse laser a été appliquée en donnant des résultats satisfaisants pour l'élaboration de poudres très diverses, aussi bien de matériaux non-oxydes (par exemple Si, C, SiC, Si₃N₄, Si/C/N, fullérènes) que d'oxydes (par exemple les composés de type Ti/C/O, Si/C/O, Si/Ti/C/O).

Il a été décrit dans le document :
«Nanocomposite Si/C/N powder production by laser-aerosol interaction », M. Cauchetier, O. Croix, N. Herlin, M. Luce, J. American Ceramic Society 77(4), p. 993-8 (1994),
l'utilisation de plusieurs précurseurs liquides pour la synthèse de particules d'oxydes (ou de non-oxydes) en utilisant un générateur d'aérosol de type dit « Pyrosol ».
Ce document décrit un appareil permettant de générer un aérosol de gouttelettes de précurseur. Les gouttelettes, de taille micrométrique, sont ensuite emmenées par un flux gazeux dans un réacteur où elles interagissent avec un faisceau laser. L'absorption d'énergie du faisceau laser entraîne l'évaporation des gouttelettes suivie de la décomposition des précurseurs et de la croissance de nanoparticules avec l'apparition d'une flamme incandescente. Cet appareil a permis, par exemple, la production de nanoparticules de composition SiCN, TiCO, et autres, avec une cadence de production de l'ordre de la dizaine à la vingtaine de grammes par heure pour un entraînement de liquide allant jusqu'à une cinquantaine de grammes par heure. Toutefois, les particules obtenues par ce type de procédé présentent fréquemment une distribution de taille non homogène (souvent bimodale avec de gros grains côtoyant des petits grains).

D'autres systèmes d'aérosols pouvant être couplés à la pyrolyse laser sont décrits dans le document US-6,193,936, lequel vise l'utilisation d'un transducteur piézoélectrique permettant de générer un aérosol. Le document décrit aussi différentes façons d'amener l'aérosol dans un réacteur de pyrolyse laser, ainsi que des dispositifs d'alimentation en réactifs et différentes solutions pour optimiser le recouvrement entre le faisceau laser et l'aérosol.

Un système dans lequel des gouttelettes de précurseur, pour la production de nanoparticules de carbone, passent par un évaporateur est décrit dans :
« Nanoparticules de carbone par pyrolyse laser : Etude de l'incorporation d'hétéroatomes », E. Marino, thèse de l'Université de Paris XI, Orsay (8 décembre 2004).

L'alimentation en précurseur liquide est effectuée par un injecteur tel que ceux connus dans le domaine de l'automobile, donc en mode pulsé, ce qui est néfaste à l'obtention d'une flamme homogène, et donc à l'obtention de composés nano-structurés homogènes.

Dans le cas de la synthèse de poudres carbonées avec ajout de fer, selon ce document Marino, l'utilisation d'un sensibilisateur carboné gazeux (butadiène), en sus du précurseur liquide (mélange de toluène et de ferrocène) est nécessaire. La fréquence de l'injecteur est de 1 à 3 Hz avec un temps d'ouverture de la vanne d'injection de 0,75 ms. Le rendement massique, défini comme la masse de particules carbones/fer recueillies par rapport à la masse de carbone/fer injectée (butadiène, vapeurs de toluène et ferrocène) est de l'ordre de 60%. Ces poudres carbonées présentent une morphologie hétérogène avec des sphérules de diamètre allant de 40 à 80 nm, ainsi que des zones filamentaires. Le rapport de présence de ces deux morphologies change en fonction des conditions expérimentales.

### Problèmes posés

Il apparaît donc que, pour la production de nanoparticules en continu et à cadences et rendements satisfaisants (typiquement supérieures à 10 grammes par heure et un rendement de 70%), l'état de l'art de la pyrolyse laser a proposé jusque là, comme meilleure solution, l'utilisation d'aérosols contenant les précurseurs sous forme de gouttelettes.

Toutefois, dans ce type de technique utilisant un pyrosol (notamment au sens du document précité Cauchetier et al.), outre l'inhomogénéité des nanoparticules obtenues, notamment en termes de taille, plusieurs inconvénients sont rencontrés. L'évaporation de gouttelettes génère d'importantes pertes d'énergie pendant l'interaction avec le faisceau laser. Par ailleurs, ce type de système, propre à former des gouttelettes, n'est pas adapté à des précurseurs trop visqueux. Enfin, la quantité de solution entraînée, typiquement de l'ordre de 25 à 50 grammes par heure, est trop limitée et nécessite déjà un débit de gaz porteur (généralement de l'argon d'entraînement) de l'ordre de deux litres par minute. Pour augmenter l'entraînement de liquide, il faut augmenter encore le flux de gaz porteur, ce qui est susceptible de générer des turbulences nocives à la bonne qualité des produits obtenus.

### Présentation succincte de l'invention

La présente invention vient améliorer la situation.

Elle propose à cet effet un procédé de synthèse de nanoparticules par pyrolyse laser, dans lequel au moins un précurseur interagit, en phase vapeur, avec un faisceau laser dans un réacteur de pyrolyse pour produire des nanoparticules. En particulier, le précurseur est :
- d'abord en phase liquide,
- puis, porté en phase vapeur dans un évaporateur, avant d'être injecté dans le réacteur.

Avantageusement, on contrôle un débit du précurseur dans la phase liquide avant son injection dans le réacteur, en mode continu.

Ainsi, le débit du précurseur est sensiblement continu et contrôlé par exemple par un régulateur de débit massique de sorte que le débit du précurseur est contrôlé finement dans la phase liquide par le régulateur de débit massique précité.

Bien entendu, par la suite, on entendra indistinctement par les termes "phase vapeur" et "phase gazeuse" le même élément, à savoir un gaz. Ainsi, lorsqu'il est indiqué plus haut que le précurseur est injecté dans le réacteur en "phase vapeur", on comprendra que le précurseur est injecté sous forme de gaz. On souligne en particulier que les termes "phase vapeur" ne désignent aucunement ici une suspension de gouttelettes dans un gaz.

Le précurseur en phase vapeur peut être porté par un gaz dans le réacteur. Ce gaz peut être un gaz neutre, mais il peut aussi comporter un sensibilisateur, pour transférer, au besoin, de l'énergie au précurseur, dans la pyrolyse. Le gaz porteur peut être encore un additif se combinant au précurseur pour former les nanoparticules.

Selon un avantage que procure la présente invention, le débit du précurseur (sous forme liquide), pour la réaction de pyrolyse laser, peut aller jusqu'à 1000 grammes par heure.

Comme on le verra ci-après dans les résultats obtenus par la mise en oeuvre de l'invention, pour un débit du précurseur sous forme liquide de l'ordre de 100 grammes par heure, pour un précurseur du type Tetra Isopropoxide de Titane (TTIP), la pyrolyse peut produire plus de 20 grammes de nanoparticules de TiCO par heure et, en particulier, plus de 25 grammes par heure.

A l'issue de ce protocole, pour obtenir des particules de TiO₂, il peut être souhaitable d'effectuer en outre un recuit thermique à basse température, typiquement entre 200 et 400°C, en atmosphère ambiante, jusqu'à disparition du carbone. On indique aussi que pour une température de recuit au-delà de 400°C, il est possible que la structure des particules se modifie.

La présente invention vise aussi un dispositif de synthèse de nanoparticules par pyrolyse laser, comportant :
- un réacteur de pyrolyse,
- des moyens pour générer un faisceau laser destiné à interagir avec un précurseur, dans ledit réacteur de pyrolyse.

En particulier, le précurseur étant initialement en phase liquide, le dispositif de synthèse comporte en outre:
- un évaporateur pour injecter le précurseur en phase vapeur dans le réacteur de pyrolyse, et
- un contrôleur de débit du précurseur en phase liquide pour injecter le précurseur en mode continu dans le réacteur.

Ainsi, la présente invention propose une injection du précurseur en mode sensiblement continu dans le réacteur et finement contrôlée dans la phase liquide du précurseur, pour une application en pyrolyse laser.

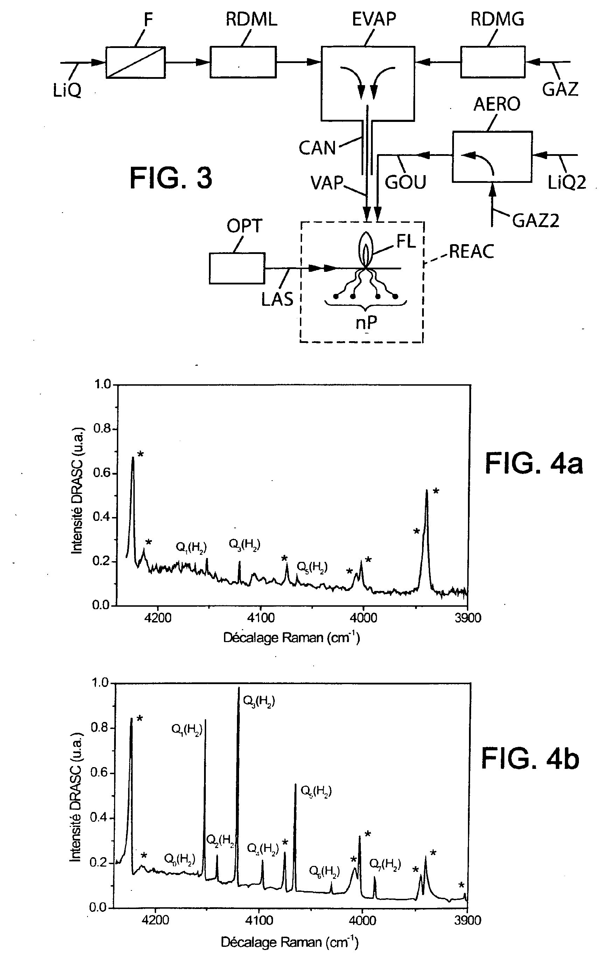

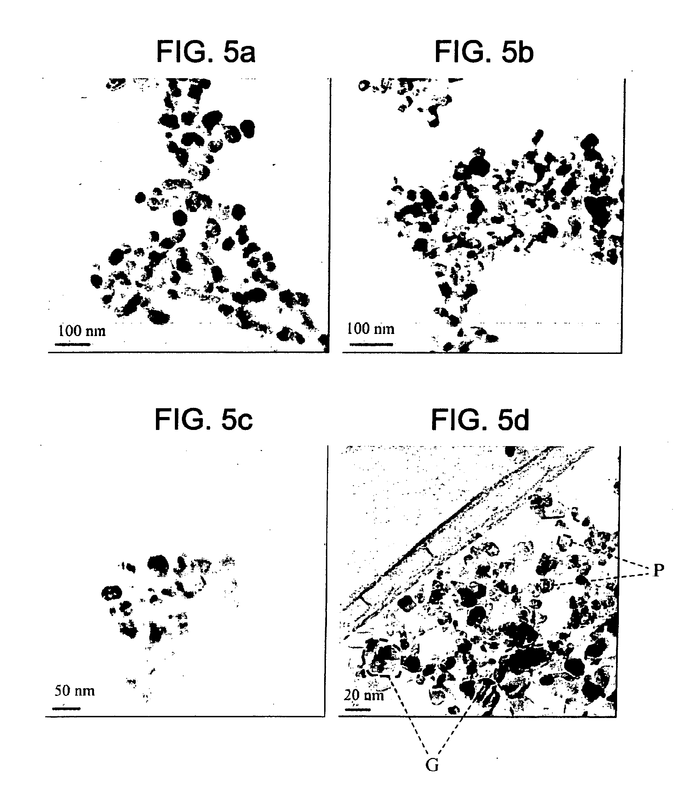

Les résultats obtenus surpassent de loin :
- ceux obtenus par la technique par combustion, d'une part (notamment du fait de l'obtention possible de poudres non-oxydes, mais aussi du fait de la bonne dispersion de la taille des grains obtenus),
- et ceux de la technique par pyrolyse laser classique (avec injection de gouttelettes), d'autre part, comme on le verra plus loin en référence aux figures 4a, 4b et 5a à 5d.

On comprendra déjà que les mécanismes physicochimiques mis en jeu en pyrolyse laser, d'une part, et en combustion (avec nécessairement une oxydation), d'autre part, sont différents.

On comprendra aussi que les mécanismes mis en jeu en pyrolyse laser par injection en phase vapeur au sens de l'invention, d'une part, et en pyrolyse laser par injection en phase liquide sous forme de gouttelettes, d'autre part, sont aussi différents. En effet, dans cette dernière technique, le faisceau laser doit nécessairement fournir une énergie supplémentaire pour évaporer les gouttelettes avant la réaction de pyrolyse proprement dite.

Il semble aussi que le contrôle indépendant du débit de gaz porteur et du débit de précurseur par passage du précurseur en phase gazeuse avant d'être au contact du gaz porteur procure des effets avantageux dans la pyrolyse effectuée.

En tout état de cause, les avantages qui ont pu être observés par rapport aux techniques de l'état de l'art sont notamment :
- une flexibilité d'utilisation,
- un contrôle modulable de la taille et du rendement de production des nanoparticules, comme décrit plus loin en référence au tableau I ci-après,
- un écart-type réduit de la taille des nanoparticules obtenues, comme décrit aussi plus loin et,
- un rendement horaire important.

Il apparaît effectivement que la mise en oeuvre de l'invention permet d'obtenir une dispersion très faible de la taille des grains, en fait la plus faible de l'art antérieur connu parmi la pyrolyse laser et la combustion. La présente invention vise alors le produit obtenu par le procédé selon l'invention, comportant des nanoparticules de synthèse par pyrolyse laser, la dispersion, en taille, des nanoparticules étant inférieure à 40% et de préférence proche de 35%. On entend ici par « dispersion » l'écart-type par rapport à une taille moyenne sur 200 grains.

### Liste des figures

D'autres avantages et caractéristiques de l'invention apparaîtront à la lecture de la description détaillée du mode de réalisation donné ci-après à titre d'exemple, en s'appuyant sur les graphiques annexés et sur lesquels :
- la figure 1 illustre schématiquement un dispositif selon un mode de réalisation de l'invention,
- la figure 2 est un schéma de principe d'un système de rinçage des canalisations du dispositif de la figure 1, dans une réalisation particulière qui est avantageuse lorsque le précurseur est susceptible de boucher ces canalisations,
- la figure 3 illustre une installation pour une technique de pyrolyse laser mixte par injection de vapeur et de gouttelettes liquides dans l'enceinte de réaction,
- les figures 4a et 4b illustrent des mesures par spectroscopie Raman (décalage Raman (cm⁻¹) en abscisses - intensité (unités arbitraires) en ordonnées) sur :
   o une flamme de pyrolyse laser alimentée par un précurseur en phase vapeur au sens de l'invention, et
   o une flamme de pyrolyse laser alimentée par un précurseur en phase liquide, sous forme de gouttelettes, au sens de l'art antérieur,
- les figures 5a à 5d sont des photographies par microscopie de nano-grains obtenus :
   o par pyrolyse laser au sens de l'invention, avec différents débits de précurseurs en phase vapeur (figures 5a à 5c), et
   o par pyrolyse laser au sens de l'art antérieur, avec formation de gouttelettes dans un réacteur (figure 5d),
- la figure 6 illustre la stabilité de la flamme de pyrolyse laser au sens de l'invention,
- les figures 7a et 7b illustrent un comptage de tailles des nanoparticules à partir des exemples illustrés sur les figures respectives 5a et 5b.

### Exemples de réalisation

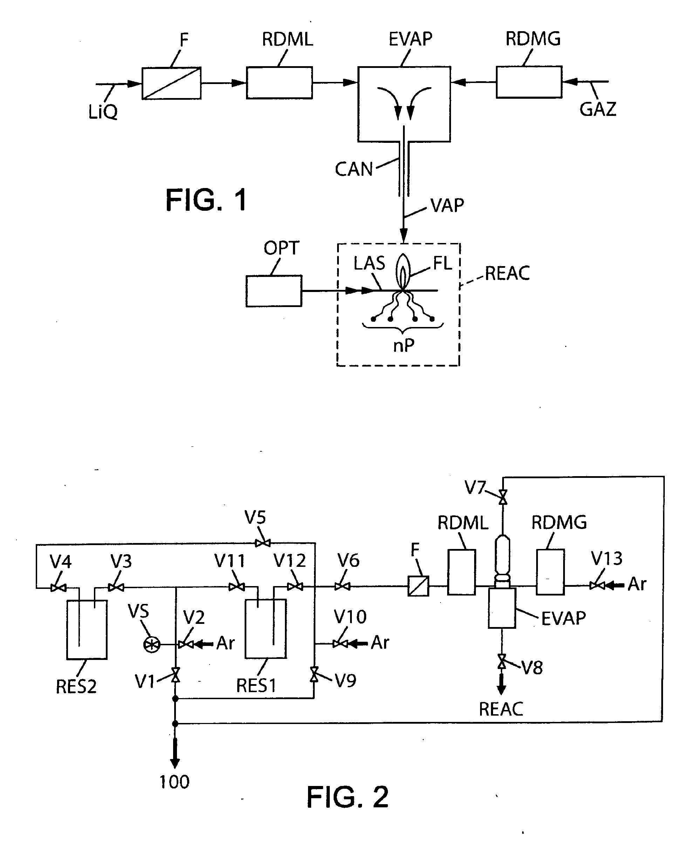

Un exemple de réalisation de l'invention est présenté en figure 1.

Le précurseur, d'abord sous forme liquide LIQ, est filtré par un filtre F. Son débit est ensuite contrôlé par un régulateur de débit massique RDML, lequel est suivi d'un évaporateur EVAP qui fait passer ensuite le précurseur en phase vapeur VAP avant d'interagir avec le faisceau laser LAS.

Ainsi, il est proposé de coupler un dispositif de pyrolyse laser à un régulateur de débit massique RDML pour contrôler le débit du précurseur dans sa forme liquide LIQ, avant de le faire passer en phase vapeur VAP en vue de son injection dans le réacteur de pyrolyse REAC.

La vapeur VAP est entraînée par un flux gazeux (préférentiellement par un gaz neutre dans la réaction de pyrolyse, tel qu'un gaz rare, par exemple de l'argon). Ce flux gazeux GAZ est géré aussi par un régulateur RDMG de débit massique, gazeux. Le mélange de vapeur et gaz (référencé VAP) en sortie de l'évaporateur-mélangeur EVAP est enfin amené jusqu'au réacteur REAC de pyrolyse laser à travers une canalisation CAN dont la température est fixée de façon à empêcher la condensation du précurseur.

Le faisceau laser LAS est issu d'une source laser OPT, éventuellement à travers un ou plusieurs collimateurs non représentés, de façon à interagir efficacement avec le flux de vapeur VAP dans le réacteur REAC, en créant une flamme FL et, de là, des nanoparticules référencées nP sur la figure 1.

Avantageusement, le débit liquide et le débit gazeux sont fixés de façon indépendante et le débit liquide peut être régulé jusqu'à un kilogramme par heure.

On indique que des montages du même type que celui illustré sur la figure 1 sont déjà utilisés en pyrolyse par combustion. Des régulateurs de débit massique liquide et/ou gazeux sont disponibles commercialement (auprès de la société Bronkhorst^{®} par exemple).

Néanmoins, pour la gestion de précurseurs hydrolysables (qui réagissent à l'air tels que le TTIP) et donc susceptibles de boucher l'évaporateur EVAP ou les canalisations du dispositif (notamment la canalisation CAN), il convient de prévoir un circuit pour faire circuler un solvant capable de nettoyer les canalisations du dispositif, et notamment l'évaporateur EVAP.

Un exemple de système d'alimentation en précurseur et de rinçage des canalisations par un tel solvant est représenté sur la figure 2.

Il est composé d'un premier réservoir RES1 contenant le précurseur et d'un second réservoir RES2 contenant le liquide de rinçage destiné à nettoyer les canalisations et notamment l'intérieur de l'évaporateur-mélangeur EVAP. Le système est équipé de vannes V1 à V13 permettant d'isoler les canalisations et d'effectuer le remplissage, l'alimentation en précurseur, puis la purge et le nettoyage. La référence 100 désigne le vide. La référence Ar (pour « Argon ») désigne les injections de gaz neutre. Les autres références de la figure 2, communes à celles de la figure 1, désignent les mêmes éléments.

On donne ci-après un exemple d'utilisation du dispositif au sens de l'invention, tel qu'illustré sur la figure 2.

Une première étape a) consiste en son remplissage. On prévoit alors les opérations suivantes :
a1) faire le vide dans les différentes canalisations (en mettant en route un pompage, en fermant les vannes V2, V3, V4, V11, V12, V10 et en ouvrant les vannes V1, V7, V9, V5, V6, V8, le système étant alors connecté à l'enceinte REAC),
a2) purger les canalisations des réservoirs RES1 et RES2 (en fermant la vanne V1, en ouvrant la vanne V2 quelques secondes seulement, puis en ouvrant à nouveau la vanne V1),
a3) remplir les réservoirs de gaz neutre (en ouvrant les vannes V3 et V11 et en fermant la vanne V1, puis en ouvrant lentement la vanne V2 et en fermant la vanne V11),
a4) remplir le système avec le solvant de nettoyage (en fermant les vannes V7 et V9, en ouvrant la vanne V13, puis la vanne V4 jusqu'à ce que le régulateur RDML au moins se remplisse de solvant, en ouvrant ensuite la vanne V7 avec précaution, puis en fermant les vannes V3, V4 et V5), et
a5) purger l'évaporateur EVAP (en ouvrant les vannes V7 et V9, puis la vanne V10 et en recommençant une nouvelle fois cette manipulation).

Une seconde étape b) d'utilisation du dispositif au sens de l'invention vise l'alimentation en précurseur du réacteur REAC et comporte les opérations suivantes :
b1) faire entrer le gaz neutre dans le réacteur (en ouvrant la vanne V8),
b2) amener le précurseur dans le réacteur (en ouvrant les vannes V11 et V 12 et en augmentant progressivement la quantité de précurseur envoyée),
b3) activer la source laser.

Une troisième étape c) vise l'arrêt de la pyrolyse et la purge du précurseur. Elle comporte les opérations suivantes :
c1) appliquer le solvant de nettoyage (en fermant les vannes V11 et V12, la flamme FL s'éteignant progressivement car plus aucun produit ne passe par l'évaporateur, en ouvrant ensuite les vannes V7 et V9, en ouvrant la vanne V10 puis en fermant progressivement les vannes V9 et V7, en fermant ensuite la vanne V10 et en ouvrant alors les vannes V3, V4, V5),
c2) purger l'évaporateur avec le solvant de nettoyage (en attendant quelques minutes, le solvant nettoyant l'évaporateur, puis en fermant ensuite les vannes V2, V3, V4 et V5 et en appliquant l'opération a5) de purge de l'évaporateur),
c3) introduire le gaz neutre dans l'évaporateur (en ouvrant la vanne V8 et en laissant un flux constant de gaz neutre dans l'évaporateur, en fermant ensuite les vannes V7 et V9 et en ouvrant enfin la vanne V10).

Le respect de ces étapes, notamment, permet d'obtenir tout type de poudre (oxyde ou non-oxyde), avec des caractéristiques satisfaisantes des grains nanométriques obtenus, comme on le verra en référence aux figures 5a à 5c.

Plus particulièrement, le dispositif au sens de l'invention permet d'obtenir, avec des débits de précurseurs liquides bien contrôlés, toutes les nanoparticules déjà obtenues par pyrolyse laser, de compositions telles que SiCN, SiCO, TiCO, TiON, ZrCO, AIO, ou autres, et ce, en utilisant les mêmes précurseurs (par exemple la famille des silazanes, des siloxanes, du TTIP, du butoxide de zirconium), ou encore d'autres précurseurs plus visqueux.

Par le couplage avec la voie de gaz RDMG, il est possible :
- d'améliorer le rendement de la réaction en ajoutant un sensibilisateur (de l'éthylène, de l'ammoniac, du silane),
- et/ou d'ajouter d'autres éléments chimiques aux nanoparticules obtenues (des atomes d'azote N, ou des atomes de métal, ou autres).

En référence maintenant à la figure 3, on couple avantageusement le dispositif au sens de l'invention (du type illustré sur la figure 1) à un injecteur de précurseur en phase liquide tel que l'aérosol AERO de la figure 3 (par exemple un dispositif de type pyrosol de l'état de l'art en pyrolyse laser).

Sur la figure 3, les références communes à la figure 1 visent les mêmes éléments.

Cette installation de la figure 3 permet d'obtenir alors des poudres de composition plus complexes (par exemple du TiCO dopé au métal, ou du SiCN dopé par des ajouts de frittage).

On rappelle qu'un aérosol AERO, de type pyrosol, reçoit un précurseur sous forme liquide LIQ2 et comporte une injection de gaz neutre GAZ2 pour produire des gouttelettes GOU de précurseur, destinées à être injectées dans le réacteur REAC. Dans le dispositif illustré sur la figure 3, la phase vapeur VAP d'un premier précurseur est injectée dans le réacteur REAC avec les gouttelettes GOU d'un second précurseur. Avantageusement, ce second précurseur peut être différent du premier précurseur. Ces deux précurseurs pourraient même être incompatibles s'ils étaient injectés ensemble par un même moyen (par le pyrosol seul ou par l'évaporateur seul). On entend ici par « incompatibles » des précurseurs susceptibles de réagir ensemble (en amont du réacteur), tels que par exemple l'ammoniac et le diborane.

### Résultats obtenus

A titre d'exemple purement illustratif, on décrit ci-après les résultats obtenus dans la synthèse de nanoparticules de TiCO à partir d'un précurseur hydrolysable de type TTIP. Le remplissage du réservoir du précurseur se fait sous atmosphère de gaz neutre tel que de l'argon (sous boîte à gants). Le débitmètre liquide utilisé peut délivrer de 0 à 100 grammes de TTIP par heure.

De nombreux paramètres de qualité de la synthèse ont pu être vérifiés, tels que la stabilité du système de pyrolyse, l'efficacité de production, la reproductibilité et la faible dispersion de la taille des nanoparticules obtenues.

### Stabilité

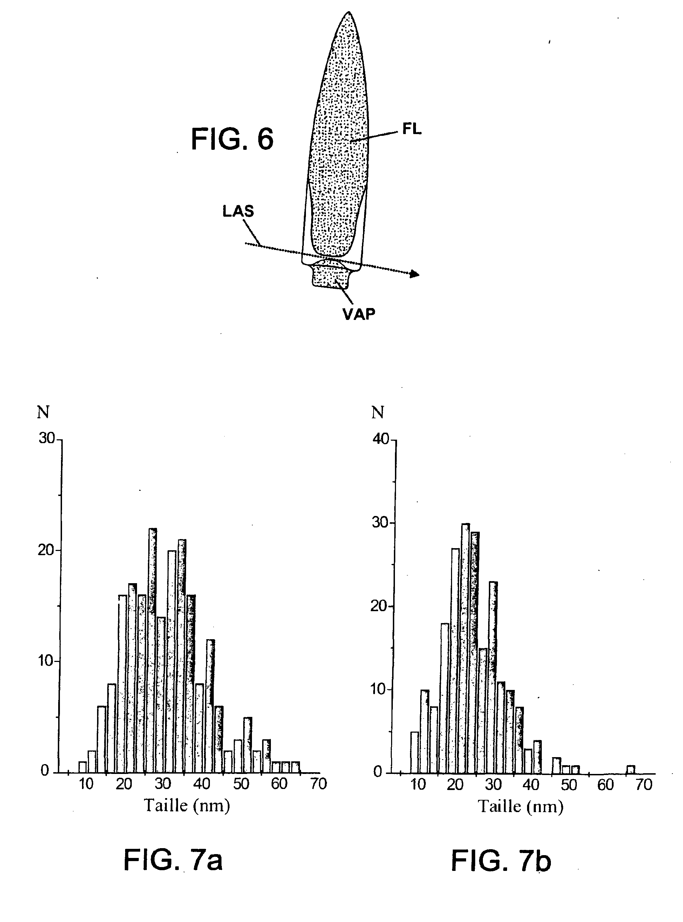

L'un des tests de qualité les plus significatifs vise la stabilité de la réaction de pyrolyse laser par l'observation de la flamme. En référence à la figure 6 qui correspond à une photographie prise de la flamme dans le réacteur, il apparaît que la flamme FL est remarquablement stable et apparaît nette (sans aucune partie floue). Aucune « pulsation » ou aucun « clignotement » n'ont pu être observés. La figure 6 montre en outre la présence d'une zone plus chaude à la base de la flamme, laquelle est traversée par le faisceau laser LAS, ainsi que le flux d'arrivée du précurseur VAP.

Un autre test permet d'illustrer la stabilité de la pyrolyse laser au sens de l'invention, comparée à celle de la pyrolyse laser utilisant le pyrosol. Il s'agit de mesures en spectroscopie Raman menées sur la flamme de pyrolyse. La figure 4a illustre le rapport signal/bruit en spectroscopie Raman, obtenu avec le pyrosol au sens de l'art antérieur, et la figure 4b illustre le rapport signal/bruit en spectroscopie Raman, obtenu avec le dispositif comportant l'évaporateur au sens de l'invention. On constate que les pics sont nettement plus marqués sur la figure 5b (voir notamment le pic Q₃(H₂)). Cette différence confirme que la flamme de pyrolyse laser au sens de l'invention est plus stable.

### Efficacité de production

A partir de 100 grammes d'un précurseur de type TTIP, il n'est théoriquement possible d'obtenir que 28 grammes par heure de poudre de TiO₂, au maximum. Or, avec un débit de 100 grammes par heure, un lot de 22 grammes de nanoparticules de TiCO a été obtenu en cinquante minutes de pyrolyse laser au sens de l'invention, ce qui correspond à une efficacité et un rendement record pour l'obtention de poudre de TiCO de 26,4 grammes par heure.

### Reproductibilité

L'aspect des nanostructures obtenues par le procédé au sens de l'invention est parfaitement reproductible d'une pyrolyse à l'autre. Typiquement, dans de mêmes conditions de pyrolyse (notamment en termes de débit de précurseur), la surface spécifique mesurée sur trois poudres de TiCO obtenues suite à trois pyrolyse distinctes, est respectivement 56, 55 et 56 m² par gramme, pour des diamètres de particules de 27.5, 28 et 27.5 nanomètres, ce qui illustre la reproductibilité de la synthèse au sens de l'invention. Ces diamètres sont estimés par la méthode dite « BET » (de Brunauer, Emmett et Teller), avec une densité fixée arbitrairement à 3,9.

### Faible dispersion de la taille de grains

En référence aux figures 5a à 5c, même dans des conditions de débit de précurseur différentes, on peut observer une morphologie homogène des poudres obtenues par le procédé au sens de l'invention. Une distribution très resserrée de la taille des grains peut être constatée sur les figures 7a et 7b qui représentent des histogrammes de mesures de taille de particules, pour une population de 200 particules, en rapport avec les figures 5a et 5b respectivement. Sur la figure 7a, la taille moyenne des grains est de 30,4 nm, pour un écart-type σ =10,6 nm. Sur la figure 7b, la taille moyenne des grains est de 24.1 nm, pour un écart-type σ =8,6 nm.

Ainsi, typiquement, la dispersion, en taille, des grains obtenus par la mise en oeuvre de l'invention est inférieure à 40%. Elle est d'ailleurs de l'ordre de 35% sur les figures 5a à 5c. On entend ici par « dispersion » l'écart-type par rapport à une taille moyenne sur 200 grains.

En revanche, sur la figure 5d, on voit nettement des tailles très différentes des grains obtenus par le dispositif pyrosol de l'art antérieur avec, en particulier, une distribution sensiblement bimodale, caractéristique (deux tailles de grains distinctes G et P sur la figure 5d).

Il convient d'indiquer en outre que la technique de synthèse de nanoparticules par combustion donne généralement de moins bons résultats encore, en termes de dispersion, que la synthèse par pyrolyse laser. Par conséquent, la faible dispersion obtenue par la mise en oeuvre du procédé au sens de l'invention est la plus petite observée au moins pour ces deux techniques de pyrolyse laser et de combustion.

Le tableau ci-après montre encore l'effet (en termes de surface spécifique) de la dilution du précurseur TTIP (de débit à 100 grammes par heure) dans un flux de gaz porteur neutre (argon) de débit variable.

**Tableau 1**

| Echantillon | Puissance laser (W) | Puissance laser absorbée par les précurseurs (W) | Débit du gaz porteur (Litres par minute) | Surface spécifique (m² par gramme) |
|---|---|---|---|---|
| #1 | 2415 | 90 | 0,5 | 32 |
| #2 | 2430 | 85 | 1 | 41 |
| #3 | 2420 | 80 | 1,5 | 57 |
| #4 | 2420 | 70 | 2 | 76 |

### Résultats des techniques de l'état de l'art et comparaisons

Il a été relevé en outre comme documents de l'art antérieur :
D1: GRUJIC-BROJCIN M ET AL: "Infrared study of laser synthesized anatase TiO2 nanopowders" JOURNAL OF PHYSICS D. APPLIED PHYSICS, INSTITUTE OF PHYSICS PUBLISHING, BRISTOL, GB, vol. 38, no. 9 - 7 mai 2005, pages 1415-1420 ;
D2: US- 6,387,531 ;
D3: US- 4,548,798 ;
D4: MIGUEL O B ET AL: "MAGNETIC NANOPARTICLES PREPARED BY LASER PYROLYSIS", septembre 2002, IEEE TRANSACTIONS ON MAGNETICS, IEEE SERVICE CENTER, NEW YORK, NY, US, pages 2616-2618 ;
D5: ALEXANDRESCU R ET AL: "TiO2 nanosized powders by TiCl4 laser pyrolysis", 1 mai 2004, NANOTECHNOLOGY, IOP, BRISTOL, GB, pages 537-545.

Aucun de ces documents ne divulgue un contrôle en mode continu du débit en phase liquide du précurseur, ni un contrôle indépendant du débit du gaz porteur.

Dans le document D1, d'après la figure 2(b) de ce document, la valeur moyenne de la taille des grains est de 37 nm et la déviation standard est de 11 nm. En référence à la figure 2(c), la valeur moyenne est de 41 nm et la déviation standard est de 12 nm. Sur la figure 2(d), la valeur moyenne est de 45 nm pour une déviation standard de 17 nm. Les résultats obtenus par la mise en oeuvre de l'invention, décrits ci-avant en référence aux figures 7a et 7b, sont meilleurs.

Dans le document D2, d'après la figure 13 de ce document (histogramme), la valeur moyenne de la taille des grains est de 19 nm, pour une déviation standard de 6 nm. Les grains obtenus par la mise en oeuvre de l'invention sont plus homogènes. Par ailleurs, le document D2 ne fournit aucune indication de rendement horaire.

## Revendications

1. Procédé de synthèse de nanoparticules par pyrolyse laser, dans lequel au moins un précurseur interagit, en phase vapeur (VAP), avec un faisceau laser (LAS) dans un réacteur de pyrolyse (REAC) pour produire des nanoparticules (nP),
**caractérisé en ce que** le précurseur est :
- d'abord en phase liquide (LIQ),
- puis, porté en phase vapeur (VAP) dans un évaporateur (EVAP), avant d'être injecté dans le réacteur (REAC),
et **en ce qu'**on contrôle un débit du précurseur dans la phase liquide (LIQ) pour être injecté dans le réacteur en mode continu.

2. Procédé selon la revendication 1, **caractérisé en ce que** le précurseur est de débit sensiblement continu et contrôlé par un régulateur de débit massique (RDML) en phase liquide (LIQ).

3. Procédé selon l'une des revendications précédentes, **caractérisé en ce que** le précurseur en phase vapeur est porté dans le réacteur par un gaz porteur, neutre dans la pyrolyse.

4. Procédé selon l'une des revendications 1 et 2, **caractérisé en ce que** le précurseur en phase vapeur est porté dans le réacteur par un gaz porteur, comportant un additif agissant en tant que sensibilisateur dans la pyrolyse.

5. Procédé selon l'une des revendications 3 et 4, **caractérisé en ce que** le gaz porteur comporte un additif se combinant au précurseur pour former les nanoparticules.

6. Procédé selon l'une des revendications 3 à 5, **caractérisé en ce que** le gaz porteur (GAZ) est de débit contrôlé par un régulateur de débit massique (RDMG),
**en ce que** le débit du précurseur, d'une part, et le débit de gaz porteur, d'autre part, sont gérés séparément,
et **en ce que** l'évaporateur (EVAP) mélange le précurseur, en phase vapeur, au gaz porteur.

7. Procédé selon l'une des revendications précédentes, **caractérisé en ce que** l'on prévoit en outre une autre injection de précurseur dans le réacteur de pyrolyse, sous forme de gouttelettes liquides (GOU).

8. Procédé selon l'une des revendications précédentes, **caractérisé en ce que** le débit du précurseur sous forme liquide est inférieur ou égal à 1000 grammes par heure.

9. Dispositif de synthèse de nanoparticules par pyrolyse laser, comportant :
- un réacteur de pyrolyse (REAC),
- des moyens (OPT) pour générer un faisceau laser (LAS) destiné à interagir avec un précurseur, dans ledit réacteur de pyrolyse,
**caractérisé en ce que**, le précurseur étant initialement en phase liquide (LIQ), le dispositif de synthèse comporte :
- un évaporateur (EVAP) pour injecter le précurseur en phase vapeur dans le réacteur de pyrolyse (REAC), et
- un contrôleur de débit du précurseur en phase liquide (DRML) pour injecter le précurseur en mode continu dans le réacteur.

10. Dispositif selon la revendication 9, **caractérisé en ce qu'**il comporte un régulateur de débit massique (DRML) en amont de l'évaporateur (EVAP) pour contrôler ledit débit du précurseur dans sa phase liquide.

11. Dispositif selon l'une des revendications 9 et 10, **caractérisé en ce qu'**il comporte en outre un circuit de gaz porteur (GAZ) propre à entraîner le précurseur en phase vapeur depuis l'évaporateur jusqu'au réacteur.

12. Dispositif selon l'une des revendications 9 à 11, **caractérisé en ce qu'**il comporte un circuit de circulation d'un solvant (RES2) pour nettoyer au moins l'évaporateur (EVAP).

13. Dispositif selon l'une des revendications 9 à 12, **caractérisé en ce qu'**il comporte en outre des moyens (AERO) d'injection d'un précurseur sous forme de gouttelettes liquides dans le réacteur.

## Claims

1. A method for synthesizing nanoparticles by laser pyrolysis, in which at least one precursor interacts, in the vapor phase (VAP), with a laser beam (LAS) in a pyrolysis reactor (REAC) to produce nanoparticles (nP),
**characterized in that** the precursor is:
- first in the liquid phase (LIQ),
- then, converted to the vapor phase (VAP) in an evaporator (EVAP), before injection into the reactor (REAC),
and **in that** a flow rate of the precursor in the liquid phase (LIQ) is controlled for continuous injection into the reactor.

2. The method as claimed in claim 1, **characterized in that** the precursor has a flow rate that is substantially continuous and controlled by a mass flow controller (RDML) in the liquid phase (LIQ).

3. The method as claimed in either of the preceding claims, **characterized in that** the vapor phase precursor is conveyed into the reactor by a carrier gas, inert gas in the pyrolysis.

4. The method as claimed in either of claims 1 and 2, **characterized in that** the vapor phase precursor is conveyed into the reactor by a carrier gas, comprising an additive acting as a sensitizer in the pyrolysis.

5. The method as claimed in either of claims 3 and 4, **characterized in that** the carrier gas comprises an additive which combines with the precursor to form the nanoparticles.

6. The method as claimed in one of claims 3 to 6, **characterized in that** the flow rate of carrier gas (GAZ) is controlled by a mass flow controller (RDMG),
**in that** the flow rate of precursor, on the one hand, and the flow rate of carrier gas, on the other hand, are managed separately, and
**in that** the evaporator (EVAP) mixes the precursor, in the vapor phase, with the carrier gas.

7. The method as claimed in one of the preceding claims, **characterized in that** a further injection of precursor is provided into the pyrolysis reactor, in the form of liquid droplets (GOU).

8. The method as claimed in one of the preceding claims, **characterized in that** the flow rate of the precursor in liquid form is lower than or equal to 1000 grams per hour.

9. A device for synthesizing nanoparticles by laser pyrolysis, comprising:
- a pyrolysis reactor (REAC),
- means (OPT) for generating a laser beam (LAS) for interacting with a precursor, in said pyrolysis reactor,
**characterized in that**, the precursor initially being in the liquid phase (LIQ), the synthesis device comprises:
- an evaporator (EVAP) for injecting the vapor phase precursor into the pyrolysis reactor (REAC), and
- a flow controller of the liquid phase precursor (DRML) for injecting the precursor continuously into the reactor.

10. The device as claimed in claim 9, **characterized in that** it comprises a mass flow controller (DRML) upstream of the evaporator (EVAP) for controlling said precursor flow rate in its liquid phase.

11. The device as claimed in either of claims 9 and 10, **characterized in that** it further comprises a circuit of carrier gas (GAZ) for entraining the vapor phase precursor from the evaporator to the reactor.

12. The device as claimed in one of claims 9 to 11, **characterized in that** it comprises a solvent circulation circuit (RES2) for cleaning at least the evaporator (EVAP).

13. The device as claimed in one of claims 9 to 12, **characterized in that** it further comprises means (AERO) for injecting a precursor in the form of liquid droplets into the reactor.

## Patentansprüche

1. Verfahren zur Herstellung von Nanopartikeln durch Laserpyrolyse, wobei mindestens ein Vorprodukt in Gasphase (VAP) mit einem Laserstrahl (LAS) in einem Pyrolysereaktor (REAC) wechselwirkt, um Nanopartikel (nP) zu erzeugen, **dadurch gekennzeichnet, dass** das Vorprodukt:
- zunächst in flüssiger Phase (LIQ) ist,
- dann in einem Verdampfer (EVAP) in Gasphase (VAP) übergeht, bevor das Vorprodukt in den Reaktor (REAC) injiziert wird,
und dass ein Durchfluss des Vorproduktes in der flüssigen Phase (LIQ) kontrolliert wird, um in den Reaktor kontinuierlich injiziert zu werden.

2. Verfahren nach Anspruch 1, **dadurch gekennzeichnet, dass** der Durchfluss des Vorproduktes im Wesentlichen kontinuierlich ist und durch einen Regler für einen spezifischen Durchfluss (RDML) in flüssiger Phase (LIQ) kontrolliert wird.

3. Verfahren nach einem der vorherigen Ansprüche, **dadurch gekennzeichnet, dass** das Vorprodukt in Gasphase durch ein Trägergas in den Reaktor getragen wird, wobei das Trägergas in der Pyrolyse neutral ist.

4. Verfahren nach einem der Ansprüche 1 und 2, **dadurch gekennzeichnet, dass** das Vorprodukt in Gasphase durch ein Trägergas in den Reaktor getragen wird, wobei das Trägergas einen Zusatzstoff aufweist, der als Sensibilisator in der Pyrolyse wirkt.

5. Verfahren nach einem der Ansprüche 3 und 4, **dadurch gekennzeichnet, dass** das Trägergas einen Zusatzstoff aufweist, der sich mit dem Vorprodukt verbindet, um die Nanopartikel zu bilden.

6. Verfahren nach einem der Ansprüche 3 bis 5, **dadurch gekennzeichnet, dass** der Durchfluss des Trägergases (GAZ) durch einen Regler für einen spezifischen Durchfluss (RDMG) kontrolliert wird,
dass der Durchfluss des Vorproduktes einerseits und der Durchfluss des Trägergases andererseits getrennt reguliert werden,
und dass der Verdampfer (EVAP) das Vorprodukt in Gasphase mit dem Trägergas vermischt.

7. Verfahren nach einem der vorherigen Ansprüche, **dadurch gekennzeichnet, dass** außerdem eine weitere Injektion des Vorproduktes in den Pyrolysereaktor in Form von flüssigen Tröpfchen (GOU) vorgesehen ist.

8. Verfahren nach einem der vorherigen Ansprüche, **dadurch gekennzeichnet, dass** der Durchfluss des Vorproduktes in flüssiger Form kleiner oder gleich 1000 Gramm pro Stunde ist.

9. Vorrichtung zur Herstellung von Nanopartikeln durch Laserpyrolyse, die aufweist:
- einen Pyrolysereaktor (REAC),
- Mittel (OPT), um einen Laserstrahl (LAS) zu erzeugen, der dazu ausgelegt ist, um mit einem Vorprodukt in dem Pyrolysereaktor wechselzuwirken,
**dadurch gekennzeichnet, dass**, wenn das Vorprodukt ursprünglich in flüssiger Phase (LIQ) ist, die Vorrichtung zur Herstellung aufweist:
- einen Verdampfer (EVAP), um das Vorprodukt in Gasphase in den Pyrolysereaktor (REAC) zu injizieren, und
- eine Einheit zur Kontrolle des Durchflusses des Vorproduktes in flüssiger Phase (DRML), um das Vorprodukt kontinuierlich in den Reaktor zu injizieren.

10. Vorrichtung nach Anspruch 9, **dadurch gekennzeichnet, dass** die Vorrichtung einen Regler für einen spezifischen Durchfluss (DRML) vor dem Verdampfer (EVAP) aufweist, um den Durchfluss des Vorproduktes in seiner flüssigen Phase zu kontrollieren.

11. Vorrichtung nach einem der Ansprüche 9 und 10, **dadurch gekennzeichnet, dass** die Vorrichtung außerdem einen Trägergaskreislauf (GAZ) aufweist, der geeignet ist, um das Vorprodukt in Gasphase vom Verdampfer bis zum Reaktor zu führen.

12. Vorrichtung nach einem der Ansprüche 9 bis 11, **dadurch gekennzeichnet, dass** die Vorrichtung einen Lösungsmittelzirkulationskreislauf (RES2), um mindestens den Verdampfer (EVAP) zu reinigen, aufweist.

13. Vorrichtung nach einem der Ansprüche 9 bis 12, **dadurch gekennzeichnet, dass** die Vorrichtung außerdem Mittel (AERO) zur Injektion eines Vorproduktes in Form von flüssigen Tröpfchen in den Reaktor aufweist.
